# EUROPEAN PATENT APPLICATION

(11) **EP 2 782 008 A1**
(43) Date of publication of application: **24.09.2014**
(21) Application number: 12849935.7
(22) Date of filing: 15.06.2012
(51) Int. Cl.: G06F 9/46

(54) **JAVA APPLICATION SERVER AND WEB SERVICE PROCESSING METHOD**

(30) Priority: 18.11.2011 CN 201110367690
(71) Applicant: Tencent Technology (Shenzhen) Company Limited, Shenzhen, Guangdong 518057 (CN)
(72) Inventor: ZHANG, Fan, Shenzhen Guangdong 518057 (CN)
(74) Representative: Ramsay, Laura Anne
(86) International application number: PCT/CN2012/076973
(87) International publication number: WO 2013/071748

(57) **Abstract**

A Java application server and method for processing Web business are presented, which relate to the technical field of the Internet. The server comprises: a network framework layer (101), an application container layer (102) and a page template layer (103); the network framework layer (101) configured to obtain a uniform resource locator for accessing Web business sent by a client-side; the application container layer (102) comprising: an obtaining module for obtaining corresponding business logic by searching corresponding relationships between uniform resource locators and business logic according to the obtained uniform resource locator; an operation module for operating the obtained business logic to obtain a data model and a view name; the page template layer (103) comprising: a searching module for obtaining a corresponding view object by searching corresponding relationships between view names and view objects according to the obtained view name; and an invoking and output module for invoking a method corresponding to the obtained view object to render and output the data model to the client-side for display. The Java application server provided by the present invention has a higher throughput and a simple structure, thus making the deployment, the operation and the maintenance of the business logic be easier, and facilitating secondary development.

## Description

### CROSS-REFERENCE TO RELATED APPLICATIONS

This application claims priority to Chinese Patent Application No. 201110367690.0, filed on November 18, 2011, which is incorporated herein by reference in its entirety.

### FIELD OF INVENTION

The present invention relates to the technical field of the Internet, and more particularly, to a Java application server and method for processing Web business.

### BACKGROUND

Java (a cross-platform programming language and a technical platform) application servers are widely used in implementing dynamic Web server-side applications, and in bearing and integrating various background business logic. The prior various Java application servers, such as Resin (an open-source Java application server), WebSphere (a commercial Java application server), TAC (a Java application server with secondary development based on an open-source code core), etc., all have the following problems: (1) relatively large volume and high complexity; (2) high human resource costs required for development and maintenance, and high financial costs required for acquiring a commercial license and support; (3) ordinary operation performance, which is unable to completely meet the processing speed requirement of the Internet business.

### SUMMARY OF THE INVENTION

To solve the problems of some of the prior Java application servers, embodiments of the present invention provide a Java application server and method for processing Web business. The technical solutions are as follows:

A Java application server comprising: a network framework layer, an application container layer and a page template layer;
the network framework layer configured to obtain a uniform resource locator for accessing Web business sent by a client-side;
the application container layer comprising:
an obtaining module for obtaining corresponding business logic by searching corresponding relationships between uniform resource locators and business logic according to the obtained uniform resource locator; and
an operation module for operating the obtained business logic to obtain a data model and a view name;
the page template layer comprising:
   a searching module for obtaining a corresponding view object by searching corresponding relationships between view names and view objects according to the obtained view name; and
   an invoking and output module for invoking a method corresponding to the obtained view object to render and output the data model to the client-side for display.

The network framework layer comprises:
a receiver configured to receive a connection request sent by the client-side, establish a connection with the client-side, and create a session object for the client-side;
a processor configured to detect a request event for accessing Web business associated with the session object, and when the request event for accessing Web business associated with the session object is detected, read the request event for accessing Web business; and
a filter configured to parse the request event for accessing Web business to obtain information about the uniform resource locator for accessing Web business.

The application container layer further comprises: one or more tag(s) of Controller, Request, Interceptor, Autowired, Component, Factory and Service, with the tag(s) used for identifying business logic.

The application container layer further comprises:
a business logic deployment module for specifying a classpath of business logic within the application container layer; and
a scanning module for scanning all business logic under the classpath, obtaining business logic tagged by Controller, Interceptor, Component, Factory or Service by utilizing a Reflection technique, and instantiating the obtained business logic.

The application container layer further comprises:
a first processing module, for business logic tagged by Controller, for obtaining a method tagged by Request within the business logic tagged by Controller by utilizing the Reflection technique, and associating the method tagged by Request with an object of the instantiated business logic; and
a second processing module, for business logic tagged by Autowired, for recording a collaborator class on which the business logic tagged by Autowired is dependent, by utilizing the Reflection technique, and assembling a dependency relationship among the business logic tagged by Autowired.

The application container layer further comprises:
a pre-interception module for preprocessing the obtained business logic, and when the preprocessed result is a first value, notifying the operation module to execute the operation of operating the obtained business logic to obtain a data model and a view name; and/or
a post-interception module for modifying the data model and the view name obtained by the operation module.

The page template layer further comprises:
a compilation module for scanning a preset template language page, and invoking a compiler to compile the template language page into a Java language source file;
a view object generation module for scanning the Java language source file, and utilizing a customized class loader to load and instantiate the Java language source file, wherein the instantiated Java language source file is a view object;
a cache module for caching the corresponding relationship between the view name of the view object and the view object, so that the searching module can obtain the corresponding view object by searching the corresponding relationships between the view names and the view objects according to the obtained view name.

A method for processing Web business comprising:
obtaining a uniform resource locator for accessing Web business sent by a client-side;
searching the corresponding relationship between the uniform resource locator and business logic for business logic according to the uniform resource locator;
operating the business logic to obtain a data model and a view name;
searching the corresponding relationship between the view name and a view object for a view object according to the view name; and
invoking a method corresponding to the view object to render and output the data model to the client-side for display.

Obtaining a uniform resource locator for accessing Web business sent by a client-side comprises:
receiving a connection request sent by a client-side, establishing a connection with the client-side, and creating a session object for the client-side;
detecting a request event for accessing Web business associated with the session object, and when a request event for accessing Web business associated with the session object is detected, reading the request event for accessing Web business; and
parsing the request event for accessing Web business to obtain information of a uniform resource locator for accessing Web business.

The method further comprises: predefining tags which identify business logic, with the tags including one or more tags of Controller, Request, Interceptor, Autowired, Component, Factory and Service.

The method further comprises:
specifying a classpath of business logic within the application container layer; and
scanning all business logic under the classpath, utilizing a reflection invoking technique (Reflection) to obtain business logic tagged by Controller, Interceptor, Component, Factory or Service, and instantiating the obtained business logic.

The method further comprises:
for business logic tagged by Controller, utilizing Reflection to obtain a method tagged by Request within the business logic tagged by Controller, and associating the method tagged by Request with an object of an instantiated business logic; and
for business logic tagged by Autowired, utilizing Reflection to record a collaborator class on which the business logic tagged by Autowired is dependent, and assembling a dependency relationship among the business logic tagged by Autowired.

Before operating the business logic to obtain a data model and a view name, the method further comprises:
preprocessing the business logic, and when the preprocessed result is a first value, executing an operation of operating the business logic to obtain a data model and a view name; when the preprocessed result is a second value, ending the operation procedure.

After operating the business logic to obtain a data model and a view name, the method further comprises:
modifying the data model and the view name.

The method further comprises:
scanning a preset template language page, and invoking a compiler to compile the template language page into a Java language source file;
scanning the Java language source file, and utilizing a customized class loader to load and instantiate the Java language source file, wherein the instantiated Java language source file is a view object; and
caching the corresponding relationship between the view name of the view object and the view object.

The Java application server provided by the present invention only comprises three layers: a network framework layer, an application container layer and a page template layer, which has a simple architecture and a reasonable work division and cooperation among the layers. Specifically, the network framework layer is configured to obtain a uniform resource locator for accessing Web business sent by a client-side. The application container layer is configured to obtain corresponding business logic by searching corresponding relationships between uniform resource locators and business logic according to the obtained uniform resource locator, and to operate the corresponding business logic to obtain a data model and a view name. The page template layer is configured to obtain a corresponding view object by searching corresponding relationships between view names and view objects according to the obtained view name, and to invoke a method corresponding to the view object to render and output the data model to the client-side for display. The implementation of the above technical solutions enables the Java application server provided by the present invention to have a higher throughput and a simple structure, thus making the deployment, the operation and the maintenance of the business logic be easier, and facilitating secondary development.

### BRIEF DESCRIPTION OF THE DRAWINGS

To explain the technical solutions of the embodiments of the present invention in a clearer manner, a brief description of the appended drawings to be referenced in the description of embodiments will be presented in the following. It is apparent that the appended drawings described as below only illustrate some embodiments of the present invention. For those of ordinary skills in the art, other drawings can also be obtained according to these appended drawings, without any creative work.
Figure 1 shows a structure diagram of a Java application server provided in Embodiment 1 of the present invention;
Figure 2 shows a structure diagram of a Java application server provided in Embodiment 2 of the present invention;
Figure 3 also shows a structure diagram of a Java application server provided in Embodiment 2 of the present invention;
Figure 4 also shows a structure diagram of a Java application server provided in Embodiment 2 of the present invention;
Figure 5 shows a flowchart of a method for processing Web business provided in Embodiment 3 of the present invention; and
Figure 6 shows a flowchart of a method for processing Web business provided in Embodiment 4 of the present invention.

### DETAILED DESCRIPTION

To make the aims, technical solutions and advantages of the present invention be clearer, a further detailed description of the implementation of the present invention, by referring to the appended drawings, will be presented in the following.

### Embodiment 1

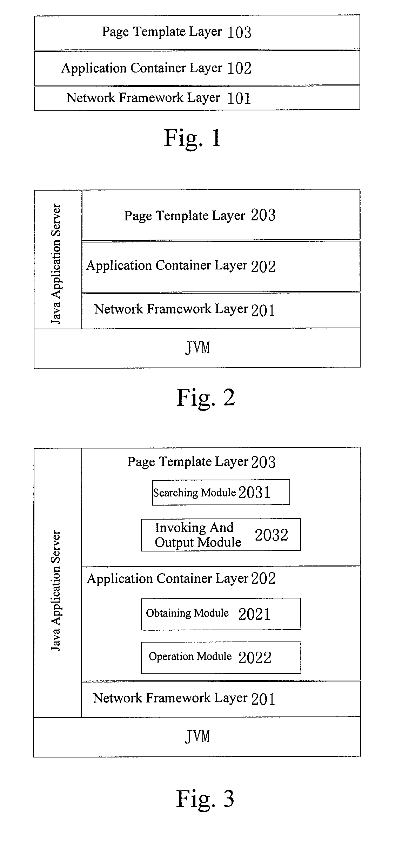

Referring to Figure 1, a Java application server comprises: a network framework layer 101, an application container layer 102 and a page template layer 103.

The network framework layer 101 is configured to obtain a uniform resource locator for accessing Web business sent by a client-side.

The application container layer 102 comprises an obtaining module and an operation module. The obtaining module is configured to obtain corresponding business logic by searching corresponding relationships between uniform resource locators and business logic according to the obtained uniform resource locator. The operation module is configured to the obtained business logic to obtain a data model and a view name.

The page template layer 103 comprises a searching module and an invoking and output module. The searching module is configured to obtain a corresponding view object by searching corresponding relationships between view names and view objects according to the obtained view name. The invoking and output module is configured to invoke a method corresponding to the obtained view object to render and output the data model to the client-side for display.

The Java application server provided by the present invention only comprises of three layers: a network framework layer, an application container layer and a page template layer, which has a simple architecture and a reasonable work division and cooperation among the layers; specifically, the network framework layer is configured to obtain a uniform resource locator for accessing Web business sent by a client-side, the application container layer is configured to search the corresponding relationship between the uniform resource locator and business logic for business logic according to the uniform resource locator, and to operate the business logic to obtain a data model and a view name, and the page template layer is configured to search the corresponding relationship between the view name and a view object for a view object according to the view name, and to invoke a method corresponding to the view object to render and output the data model to the client-side for display. The implementation of the above technical solutions enables the Java application server provided by the present invention to have a higher throughput and a simple structure, thus reducing the deployment, operation and maintenance difficulty of the business logic, and facilitating secondary development.

### Embodiment 2:

Referring to Figure 2, a Java application server comprises: a network framework layer 201, an application container layer 202 and a page template layer 203, wherein the network framework layer 201, the application container layer 202 and the page template layer 203 run directly on the JVM (Java Virtual Machine and a Runtime Environment), not dependent on any other third-party software.

Referring to Figure 3, in the embodiment of the present invention, the network framework layer 201 is configured to obtain a uniform resource locator for accessing Web business sent by a client-side.

The application container layer 202 comprises an obtaining module 2021 and an operation module 2022. The obtaining module 2021 is configured to obtain corresponding business logic by searching corresponding relationships between uniform resource locators and business logic according to the obtained uniform resource locator. The operation module 2022 is configured to operate the obtained business logic to obtain a data model and a view name.

The page template layer 203 comprises a searching module 2031 and an invoking and output module 2032. The searching module 2031 is configured to obtain a corresponding view object by searching corresponding relationships between view names and view objects according to the obtained view name. The invoking and output module 2032 is configured to invoke a method corresponding to the obtained view object to render and output the data model to the client-side for display.

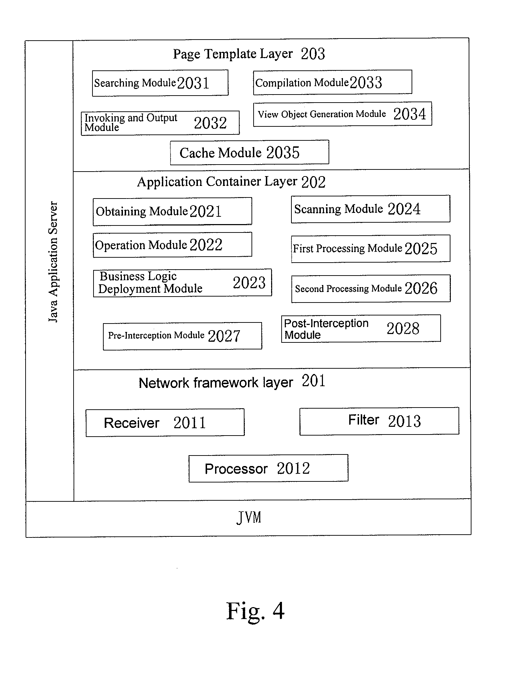

Referring to Figure 4, the network framework layer 201 of the Java application server provided in the embodiment of the present invention comprises a receiver 2011, a processor 2012 and a filter 2013.

The receiver 2011 is configured to receive a connection request sent by the client-side, establish a connection with the client-side, and create a session object for the client-side. The processor 2012 is configured to detect a request event for accessing Web business associated with the session object, and when the request event for accessing Web business associated with the session object is detected, read the request event for accessing Web business. The filter 2013 is configured to parse the request event for accessing Web business to obtain information about the uniform resource locator for accessing Web business.

In the embodiment of the present invention, the application container layer 202 further comprises one or more tags of Controller, Request, Interceptor, Autowired, Component, Factory and Service, with the tag(s) being used to identify the business logic.

Referring to Figure 4, correspondingly, the application container layer 202 further comprises a business logic deployment module 2023, a scanning module 2024, a first processing module 2025, a second processing module 2026, a pre-interception module 2027 and a post-interception module 2028.

The business logic deployment module 2023 is configured to specify a classpath of business logic within the application container layer.

The scanning module 2024 is configured to scan all business logic under the classpath, obtain business logic tagged by Controller, Interceptor, Component, Factory or Service by utilizing a Reflection technique, and instantiate the obtained business logic.

The first processing module 2025 is configured to, for business logic tagged by Controller, obtain a method tagged by Request within the business logic tagged by Controller by utilizing the Reflection technique, and associate the method tagged by Request with an object of the instantiated business logic.

The second processing module 2026 is configured to, for business logic tagged by Autowired, record a collaborator class on which the business logic tagged by Autowired is dependent, by utilizing the Reflection technique, and assemble a dependency relationship among the business logic tagged by Autowired.

The pre-interception module 2027 is configured to preprocess the obtained business logic, and when the preprocessed result is a first value, notify the operation module 2022 to execute the operation of operating the obtained business logic to obtain a data model and a view name.

The post-interception module 2028 is configured to modify the data model and the view name obtained by the operation module 2022.

Referring to Figure 4, the page template layer 203 further comprises a compilation module 2033, a view object generation module 2034 and a cache module 2035.

The compilation module 2033 is configured to scan a preset template language page, and invoke a compiler to compile the template language page into a Java language source file.

The view object generation module 2034 is configured to scan the Java language source file, and utilize a customized class loader to load and instantiate the Java language source file, wherein the instantiated Java language source file is a view object.

The cache module 2035 is configured to cache the corresponding relationship between the view name of the view object and the view object, so that the searching module 2031 can obtain the corresponding view object by searching the corresponding relationships between the view names and the view objects according to the obtained view name.

The page template layer 203 predefines a template language and a grammar herein. For example, in the embodiment of the present invention, the predefined template language can be expressed by the following keywords, wherein the keywords include set, function, if, elif, else, for, in, end, extend, segment, super, out, url, main, compress, select, when or other, and the statements composed of the keywords can include:
a set statement: setting one or more variable(s);
a function statement: customized function;
an if/elif/else statement: logic judgment;
a for/in statement: loop iteration;
an end statement: end of a block;
an extend statement: page inheritance and extension;
a segment statement: customized page segment;
a super statement: invoking a customized segment of a parent page;
an out built-in customized function: outputting a page character string segment with transferred meaning;
a url built-in customized function: rewriting and outputting of URL (Uniform/Universal Resource Locator);
a main built-in customized page segment: page's default entrance segment;
a compress statement: compressing page output;
a select/when/other statement: multi-branch logic judgment.

In the embodiment of the present invention, the predefined grammar can include the following grammar.
a) Closed-type grammar, which can be shown as follows:
   ${parameter} or ${customized function name parameter}, which is used for object navigation or output of a customized function;
   @{customized segment name} or @{super. customized segment name}, which is used to invoke a customized segment.
b) Single-row grammar, which can be shown as follows:
   #statement keywords parameter, which is used for the statement.

It should be made clear that, in the embodiment of the present invention, in addition to the above-mentioned keywords, statements and grammar, the definition of the template language can also include object navigation, expressions, and the like, wherein, the object navigation is consistent with the specifications of JEE (Java Platform Enterprise Edition) page view template, and the expressions are consistent with the Java language specifications.

The Java application server provided by the present invention only comprises three layers: a network framework layer, an application container layer and a page template layer, which has a simple architecture and a reasonable work division and cooperation among the layers. Specifically, the network framework layer is configured to obtain a uniform resource locator for accessing Web business sent by a client-side. The application container layer is configured to obtain corresponding business logic by searching corresponding relationships between uniform resource locators and business logic according to the obtained uniform resource locator, and to operate the corresponding business logic to obtain a data model and a view name. The page template layer is configured to obtain a corresponding view object by searching corresponding relationships between view names and view objects according to the obtained view name, and to invoke a method corresponding to the view object to render and output the data model to the client-side for display. The implementation of the above technical solutions enables the Java application server provided by the present invention to have a higher throughput and a simple structure, thus making the deployment, the operation and the maintenance of the business logic be easier, and facilitating secondary development.

### Embodiment 3

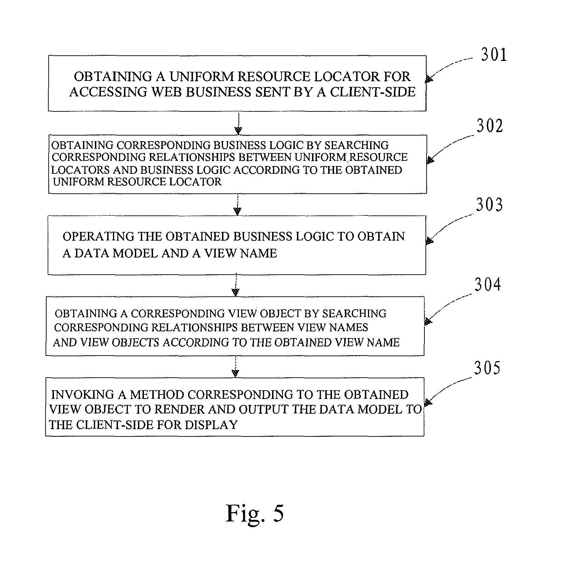

Referring to Figure 5, a method for processing Web business, with a Java application server being specifically as the executing body of the method, specifically comprises the following steps:
Step 301: obtaining a uniform resource locator for accessing Web business sent by a client-side;
Step 302: obtaining corresponding business logic by searching corresponding relationships between uniform resource locators and business logic according to the obtained uniform resource locator;
Step 303: operating the obtained business logic to obtain a data model and a view name;
Step 304: obtaining a corresponding view object by searching corresponding relationships between view names and view objects according to the obtained view name; and
Step 305: invoking a method corresponding to the obtained view object to render and output the data model to the client-side for display.

The Java application server provided by the present invention only comprises three layers: a network framework layer, an application container layer and a page template layer, which has a simple architecture and a reasonable work division and cooperation among the layers. Specifically, the network framework layer is configured to obtain a uniform resource locator for accessing Web business sent by a client-side. The application container layer is configured to obtain corresponding business logic by searching corresponding relationships between uniform resource locators and business logic according to the obtained uniform resource locator, and to operate the corresponding business logic to obtain a data model and a view name. The page template layer is configured to obtain a corresponding view object by searching corresponding relationships between view names and view objects according to the obtained view name, and to invoke a method corresponding to the view object to render and output the data model to the client-side for display. The implementation of the above technical solutions enables the Java application server provided by the present invention to have a higher throughput and a simple structure, thus making the deployment, the operation and the maintenance of the business logic be easier, and facilitating secondary development.

### Embodiment 4

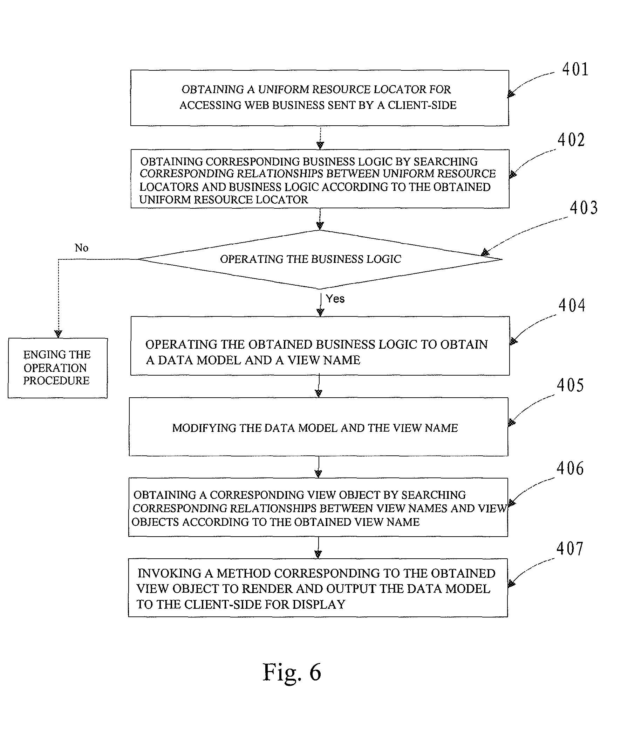

The method for processing Web business provided in the embodiment of the present invention applies to the Java application server as shown in Figure 1. Referring to Figure 6, a method for processing Web business, with a Java application server being specifically as the executing body of the method, specifically comprises the following steps:

Step 401: Obtaining a uniform resource locator for accessing Web business sent by a client-side.

Specifically, obtaining a uniform resource locator for accessing Web business sent by a client-side comprises:
receiving a connection request sent by the client-side, establishing a connection with the client-side, and creating a session object for the client-side;
detecting a request event for accessing Web business associated with the session object, and
when a request event for accessing Web business associated with the session object is detected, reading the request event for accessing Web business;
parsing the request event for accessing Web business to obtain information about the uniform resource locator for accessing Web business.

The method according to Step 401 is specifically completed by the network framework layer in the Java application server.

Step 402: obtaining corresponding business logic by searching corresponding relationships between uniform resource locators and business logic according to the obtained uniform resource locator.

In the embodiment of the present invention, the Java application server predefines one or more tag(s) which identify business logic, with the tag(s) including one or more tag(s) of Controller, Request, Interceptor, Autowired, Component, Factory and Service.

Before obtaining corresponding business logic by searching corresponding relationships between uniform resource locators and business logic according to the obtained uniform resource locator, the Java application server deploys the business logic developed to be given to the Java application server into the application container layer in advance. The application container layer possesses the abilities of IoC (Inversion of Control) and MVC (Model View Controller, a design mode with Model-View-Controller as the core).

Specifically, deploying the business logic developed to be given to the Java application server into the application container layer in advance by the Java application server comprises:
specifying a classpath of business logic within the application container layer; and
scanning all business logic under the classpath, obtaining business logic tagged by Controller, Interceptor, Component, Factory or Service by utilizing a Reflection technique, and instantiating the obtained business logic.

Further, in order to achieve the IoC ability of the application container layer, the method further comprises:
for business logic tagged by Controller, obtaining a method tagged by Request within the business logic tagged by Controller by utilizing the Reflection technique, and associating the method tagged by Request with an object of the instantiated business logic; and
for business logic tagged by Autowired, recording a collaborator class on which the business logic tagged by Autowired is dependent, by utilizing the Reflection technique, and assembling a dependency relationship among the business logic tagged by Autowired.

Step 403: Preprocessing the obtained business logic, and determining whether to operate the obtained business logic according to the preprocessed result, wherein when the preprocessed result is a first value, executing Step 404; when the preprocessed result is a second value, ending the operation procedure.

Here, the preprocessed result is a Boolean value, for instance, the first value is 1, and the second value is 0.

Step 404: operating the obtained business logic to obtain a data model and a view name.

Since the application container layer in the Java application server possesses the MVC ability in itself, the data model and the view name which are corresponding to the business logic could be obtained when the business logic is operated in the Java application server.

Step 405: modifying the data model and the view name.

It should be made clear that this step is an optional step to be executed, and aims at improving the flexibility of the Java application server.

The above-mentioned Steps 402-405 are all completed by the application container layer in the Java application server.

In the embodiment of the present invention, the page template layer in the Java application server predefines a template language and a corresponding grammar, wherein the template language can be expressed by the following keywords. The keywords include set, function, if, elif, else, for, in, end, extend, segment, super, out, url, main, compress, select, when or other, and the statements composed of the keywords can include:
a set statement: setting one or more variable(s);
a function statement: customized function;
an if/elif/else statement: logic judgment;
a for/in statement: loop iteration;
an end statement: end of a block;
an extend statement: page inheritance and extension;
a segment statement: customized page segment;
a super statement: invoking a customized segment of a parent page;
an out built-in customized function: outputting a page character string segment with transferred meaning;
a url built-in customized function: rewriting and outputting of URL (Uniform/Universal Resource Locator);
a main built-in customized page segment: page's default entrance segment;
a compress statement: compressing page output;
a select/when/other statement: multi-branch logic judgment.

In the embodiment of the present invention, the predefined grammar can include the following grammar.

a) Closed-type grammar, which can be shown as follows:
   ${parameter} or ${customized function name parameter}, which is used for object navigation or output of a customized function;
   @{customized segment name} or @{super. customized segment name}, which is used to invoke a customized segment.
b) Single-row grammar, which can be shown as follows:
   #statement keywords parameter, which is used for the statement.

It should be made clear that, in the embodiment of the present invention, in addition to the above-mentioned keywords, statements and grammar, the definition of the template language can also include object navigation, expressions, and the like, wherein, the object navigation is consistent with the specifications of JEE (Java Platform Enterprise Edition) page view template, and the expressions are consistent with the Java language specifications.

Based on the above description, the page template layer generates a view object in advance, and stores the corresponding relationship between the view object and the view name of the view object in a cache, so that when the application container layer obtains the data model and the view name, it can obtain the corresponding view object by searching the corresponding relationships between the view names of the view objects and the view objects according to the view name. The page template layer also render and output the data model according to a method corresponding to the view object.

Generating a view object in advance and storing the generated view object in a cache by the page template layer comprises:
scanning a preset template language page, and invoking a compiler to compile the template language page into a Java language source file;
scanning the Java language source file, and loading and instantiating the Java language source file by utilizing a customized class loader, wherein the instantiated Java language source file is a view object; and
caching the corresponding relationship between the view name of the view object and the view object.

Step 406: Obtaining a corresponding view object by searching corresponding relationships between view names and view objects according to the obtained view name.

Step 407: Invoking a method corresponding to the obtained view object to render and output the data model to the client-side for display.

The method according to Steps 406-407 are specifically implemented by the page template layer in the Java application server.

The Java application server provided by the present invention only comprises three layers: a network framework layer, an application container layer and a page template layer, which has a simple architecture and a reasonable work division and cooperation among the layers. Specifically, the network framework layer is configured to obtain a uniform resource locator for accessing Web business sent by a client-side. The application container layer is configured to obtain corresponding business logic by searching corresponding relationships between uniform resource locators and business logic according to the obtained uniform resource locator, and to operate the corresponding business logic to obtain a data model and a view name. The page template layer is configured to obtain a corresponding view object by searching corresponding relationships between view names and view objects according to the obtained view name, and to invoke a method corresponding to the view object to render and output the data model to the client-side for display. The implementation of the above technical solutions enables the Java application server provided by the present invention to have a higher throughput and a simple structure, thus making the deployment, the operation and the maintenance of the business logic be easier, and facilitating secondary development.

Those of ordinary skills in the art can understand that all or some of the steps for implementing the above-mentioned embodiments can be completed by hardware in itself, or by hardware by executing instructions of a program, and the program can be stored in a computer-readable storage medium, wherein the aforesaid storage medium can be a read-only memory, a disk or an optical disk, etc.

What is stated above is the preferable specific implementation of the present invention, to which the protection scope of the present invention is not limited. Any change or replacement within the technical scope disclosed by the present invention, which can be easily conceived by those skilled in the art, shall be included in the protection scope of the present invention. Therefore, the protection scope of the present invention shall be based on the protection scope of the claims.

### INDUSTRIAL APPLICABILITY

The Java application server provided by the present invention only comprises three layers: a network framework layer, an application container layer and a page template layer, which has a simple architecture and a reasonable work division and cooperation among the layers. The Java application server provided by the present invention has a higher throughput and a simple structure, thus making the deployment, the operation and the maintenance of the business logic be easier, and facilitating secondary development.

## Claims

1. A Java application server, comprising a network framework layer, an application container layer and a page template layer;
the network framework layer configured to obtain a uniform resource locator for accessing Web business sent by a client-side;
the application container layer comprising:
an obtaining module for obtaining corresponding business logic by searching corresponding relationships between uniform resource locators and business logic according to the obtained uniform resource locator; and
an operation module for operating the obtained business logic to obtain a data model and a view name;
the page template layer comprising:
a searching module for obtaining a corresponding view object by searching corresponding relationships between view names and view objects according to the obtained view name; and
an invoking and output module for invoking a method corresponding to the obtained view object to render and output the data model to the client-side for display.

2. The Java application server according to claim 1, wherein the network framework layer comprises:
a receiver configured to receive a connection request sent by the client-side, establish a connection with the client-side, and create a session object for the client-side;
a processor configured to detect a request event for accessing Web business associated with the session object, and when the request event for accessing Web business associated with the session object is detected, read the request event for accessing Web business; and
a filter configured to parse the request event for accessing Web business to obtain information about the uniform resource locator for accessing Web business.

3. The Java application server according to claim 1, wherein the application container layer further comprises: one or more tag(s) of Controller, Request, Interceptor, Autowired, Component, Factory and Service, with the tag(s) used for identifying business logic.

4. The Java application server according to claim 3, wherein the application container layer further comprises:
a business logic deployment module for specifying a classpath of business logic within the application container layer; and
a scanning module for scanning all business logic under the classpath, obtaining business logic tagged by Controller, Interceptor, Component, Factory or Service by utilizing a Reflection technique, and instantiating the obtained business logic.

5. The Java application server according to claim 4, wherein the application container layer further comprises:
a first processing module, for business logic tagged by Controller, for obtaining a method tagged by Request within the business logic tagged by Controller by utilizing the Reflection technique, and associating the method tagged by Request with an object of the instantiated business logic; and
a second processing module, for business logic tagged by Autowired, for recording a collaborator class on which the business logic tagged by Autowired is dependent, by utilizing the Reflection technique, and assembling a dependency relationship among the business logic tagged by Autowired.

6. The Java application server according to claim 1, wherein the application container layer further comprises:
a pre-interception module for preprocessing the obtained business logic, and when the preprocessed result is a first value, notifying the operation module to execute the operation of operating the obtained business logic to obtain a data model and a view name; and/or
a post-interception module for modifying the data model and the view name obtained by the operation module.

7. The Java application server according to claim 1, wherein the page template layer further comprises:
a compilation module for scanning a preset template language page, and invoking a compiler to compile the template language page into a Java language source file;
a view object generation module for scanning the Java language source file, and utilizing a customized class loader to load and instantiate the Java language source file, wherein the instantiated Java language source file is a view object; and
a cache module for caching the corresponding relationship between the view name of the view object and the view object, so that the searching module can obtain the corresponding view object by searching the corresponding relationships between the view names and the view objects according to the obtained view name.

8. A method for processing Web business, comprising:
obtaining a uniform resource locator for accessing Web business sent by a client-side;
obtaining corresponding business logic by searching corresponding relationships between uniform resource locators and business logic according to the obtained uniform resource locator;
operating the obtained business logic to obtain a data model and a view name;
obtaining a corresponding view object by searching corresponding relationships between view names and view objects according to the obtained view name; and
invoking a method corresponding to the obtained view object to render and output the data model to the client-side for display.

9. The method according to claim 8, wherein obtaining a uniform resource locator for accessing Web business sent by a client-side comprises:
receiving a connection request sent by the client-side, establishing a connection with the client-side, and creating a session object for the client-side;
detecting a request event for accessing Web business associated with the session object, and when the request event for accessing Web business associated with the session object is detected, reading the request event for accessing Web service; and
parsing the request event for accessing Web business to obtain information about the uniform resource locator for accessing Web business.

10. The method according to claim 8, further comprising: predefining one or more tag(s) which identify business logic, with the tag(s) including one or more tag(s) of Controller, Request, Interceptor, Autowired, Component, Factory and Service.

11. The method according to claim 10, further comprising:
specifying a classpath of business logic within the application container layer; and
scanning all business logic under the classpath, obtaining business logic tagged by Controller, Interceptor, Component, Factory or Service by utilizing a Reflection technique, and instantiating the obtained business logic.

12. The method according to claim 11, further comprising:
for business logic tagged by Controller, obtaining a method tagged by Request within the business logic tagged by Controller by utilizing the Reflection technique, and associating the method tagged by Request with an object of the instantiated business logic; and
for business logic tagged by Autowired, recording a collaborator class on which the business logic tagged by Autowired is dependent, by utilizing the Reflection technique, and assembling a dependency relationship among the business logic tagged by Autowired.

13. The method according to claim 8, wherein before operating the business logic to obtain a data model and a view name, the method further comprises:
preprocessing the obtained business logic, and when the preprocessed result is a first value, executing the operation of operating the obtained business logic to obtain a data model and a view name; when the preprocessed result is a second value, ending the operation procedure.

14. The method according to claim 8, wherein after operating the business logic to obtain a data model and a view name, the method further comprises:
modifying the data model and the view name.

15. The method according to claim 8, further comprising:
scanning a preset template language page, and invoking a compiler to compile the template language page into a Java language source file;
scanning the Java language source file, and loading and instantiating the Java language source file by utilizing a customized class loader, wherein the instantiated Java language source file is a view object; and
caching the corresponding relationship between the view name of the view object and the view object.
